# FASCICULE DE BREVET EUROPEEN

(11) **EP 0 673 745 B1**
(45) Date de publication et mention de la délivrance du brevet: **29.04.1998**
(21) Numéro de dépôt: 95420060.6
(22) Date de dépôt: 07.03.1995
(51) Int. Cl.: B29C 45/37

(54) **Dispositif marqueur avec insert mobile indexable pour moule d'injection**
Markiervorrichtung mit einem bewegbaren indexierbaren Einsatz für Spritzgiessform
Marking device with a movable indexable insert for injection mould

(30) Priorité: 21.03.1994 FR 9403500
(43) Date de publication de la demande: 27.09.1995
(73) Titulaire: Picco, Bernard, 01870 Groissiat (FR); Picco, Patrick, 01100 Oyonnax (FR)
(72) Inventeur: Picco, Bernard, 01870 Groissiat (FR); Picco, Patrick, 01100 Oyonnax (FR)
(74) Mandataire: Maureau, Philippe

(56) Documents cités:
- DE-C- 3 931 200
- DE-U- 8 901 523
- DE-U- 9 314 975
- PLASTVERARBEITER, vol. 44, no. 8, Août 1993 SPEYER/RHEIN DE, 'Normalien-Technologie'

## Description

La présente invention concerne un dispositif marqueur avec insert mobile indexable pour moule d'injection.

Il est courant d'utiliser de tels dispositifs placés dans les moules d'injection pour indiquer, sur les pièces injectées, par exemple le mois, par son quantième et le millésime de l'année de leur fabrication.

Par le document EP-0 194 522, on connaît un dispositif marqueur comprenant, d'une part, une pièce extérieure en forme de douille cylindrique présentant, à l'une de ses extrémités une tête élargie de plus grands diamètres extérieur et intérieur que sa partie restante ou tige tubulaire et destinée à être fixée définitivement dans la paroi du moule de manière que son extrémité de petit diamètre affleure la face interne de la paroi du moule, la couronne formée à cette extrémité de la douille portant, régulièrement répartis sur sa surface annulaire, les douze quantièmes des mois d'une année et, d'autre part, un corps central cylindrique ayant sensiblement la même longueur que la douille, présentant, lui aussi, à l'une de ses extrémités, une tête élargie de même diamètre et de même longueur que l'alésage de la tête élargie de la douille, dont la partie restante ou queue présente le même diamètre et la même longueur que l'alésage de la partie non élargie ou tige de la douille, et dont l'extrémité de petit diamètre porte un index de désignation d'un quantième de mois. Le corps est monté pivotant dans la douille qui lui sert de palier et peut être pivoté dans douze positions stables régulièrement décalées angulairement et dans chacune desquelles l'index désigne un quantième de mois, des moyens étant prévus pour permettre l'entraînement en rotation du corps central par rapport à la douille et d'autres moyens élastiques étant prévus pour permettre son immobilisation stable dans la position angulaire choisie.

Généralement, les moyens pour permettre l'entraînement en rotation du corps central sont constitués par l'index gravé à son extrémité de petit diamètre qui est la seule accessible depuis la face interne de la paroi du moule et dans lequel on peut engager la lame d'un tournevis.

Il résulte de la structure de ce dispositif qu'en raison de l'engagement de sa tête élargie dans la partie élargie de l'alésage de la douille, le retrait du corps central par la face interne de la paroi du moule n'est pas possible.

Comme en outre, il n'est pas, non plus, possible de le retirer de la paroi du moule par sa face externe, ce corps central est absolument indémontable. En conséquence, il n'est pas envisageable de graver aussi, sur sa face d'extrémité de petit diamètre, le millésime de l'année de fabrication. Si cette information est nécessaire, il faut alors placer, dans la paroi du moule, un second dispositif ou insert dateur, plus simple mais démontable et dont l'extrémité, qui affleure la face interne de la paroi du moule, porte le millésime de l'année en cours.

Pour remédier à cet inconvénient, on a imaginé un autre dispositif dateur dans lequel le corps central peut être retiré de la douille depuis la face interne du moule. A cet effet l'alésage de la douille extérieure est de diamètre constant, il est formé à son extrémité la plus éloignée de la face interne du moule et présente, en partie intermédiaire, une collerette intérieure pourvue d'une encoche radiale tandis que le corps central présente, du côté de son extrémité portant les gravures de l'index de désignation du quantième du mois et le millésime de l'année, une tête élargie de même diamètre que l'alésage de la douille et dont la hauteur est égale à la longueur du segment de cet alésage compris entre la collerette interne et l'extrémité de la douille portant les quantièmes des mois. La partie restante ou queue de ce corps central, de même diamètre que l'alésage de la collerette de la douille porte, à une distance de sa tête égale à l'épaisseur de la collerette de la douille, un doigt radial apte à traverser la collerette en passant par son encoche radiale et à prendre appui, après rotation du corps central, contre la face intérieure de cette collerette, tandis qu'une bague, logée dans l'alésage de la douille, entre sa collerette et son extrémité fermée, et dont la face tournée vers la collerette présente douze encoches radiale aptes à loger partiellement le doigt radial du corps central, est pressée élastiquement en direction de la collerette par un ressort comprimé entre elle et l'extrémité fermée de l'alésage de la douille. Ainsi, il suffit de disposer les gravures des quantièmes des mois dans l'ordre chronologique et de sorte que la position angulaire de l'intervalle séparant le premier et le douzième mois, en coïncidence avec celle de l'encoche de la collerette pour pouvoir engager le corps central dans la douille et le ressortir après douze rotations d'un douzième de tour et une très légère rotation supplémentaire.

L'inconvénient de ce dispositif réside dans le fait que, lorsqu'en vue du remplacement du corps central, en fin d'année, son ergot est amené en coïncidence avec l'encoche de la collerette, le ressort risque d'éjecter trop brutalement le corps central pour qu'il puisse être récupéré, de façon sûre, par l'opérateur.

En outre, les surfaces du doigt et de la couronne crantée qui participent à l'indexation du corps central sont nécessairement très petites, ce qui, par conséquent, ne facilite pas l'indexation qui est toujours très incertaine.

Le but de l'invention est de fournir un dispositif marqueur avec insert mobile indexable, dans lequel il est possible de réaliser le changement de l'insert depuis l'intérieur du moule, sans démontage de ce dernier, et de réaliser l'indexage sur la surface la plus grande possible. Ce dispositif doit également être simple et d'une grande fiabilité.

A cet effet, le dispositif marqueur avec insert mobile indexable pour moule d'injection qu'elle propose est du type comprenant :
- d'une part une pièce extérieure en forme de douille cylindrique présentant, à l'une de ses extrémités une tête élargie de plus grands diamètres extérieur et intérieur que sa partie restante ou tige tubulaire, et destinée à être fixée définitivement dans la paroi du moule de telle sorte que son extrémité de petit diamètre affleure la face interne de la paroi du moule, la couronne formée à cette extrémité de la douille portant, en relief ou en creux, des indications réparties sur sa surface annulaire, et
- d'autre part un corps central cylindrique, ayant sensiblement la même longueur que la douille, présentant également à l'une de ses extrémités une tête élargie de sensiblement même diamètre et longueur que l'alésage de la tête élargie de la douille, et une partie restante, ou queue, de sensiblement même diamètre que l'alésage de la partie non élargie ou tige de la douille, corps central dont l'extrémité de plus petit diamètre porte, de préférence en creux, un index de désignation d'une indication portée sur la couronne de la douille, qui est monté pivotant dans la douille servant de palier et qui peut être pivoté dans autant de positions stables qu'il y a d'indications sur la couronne de la douille,
   des moyens étant prévus pour permettre l'entraînement en rotation du corps central par rapport à la douille et d'autres moyens, élastiques, étant prévus pour permettre son immobilisation stable dans la position angulaire choisie.

Ce dispositif marqueur, selon l'invention, est caractérisé en ce que la queue et la tête du corps central sont constituées par deux pièces coaxiales indépendantes présentant l'une par rapport à l'autre une complémentarité de forme assurant leur blocage en rotation, en ce que la queue (3) du corps central comporte :
- d'une part une gorge annulaire circonférentielle dans laquelle peut venir se loger l'extrémité d'un doigt de retenue solidaire de la tige tubulaire de la douille, et faisant saillie à l'intérieur de l'alésage de cette tige, de telle sorte que lorsque l'extrémité du doigt est logée dans la gorge annulaire, la surface de la queue du corps central portant l'index de désignation affleure la face interne de la paroi du moule, et
- d'autre part une gorge de direction axiale, débouchant dans la gorge annulaire et s'étendant du côté de la tête du corps central, destinée à permettre le passage du doigt,
   et en ce que les moyens élastiques prévus pour immobiliser le corps central dans la position angulaire choisie sont disposés entre la tête du corps central et l'alésage de la tête de la douille.

Ainsi, lorsque la queue et la tête du corps central sont dans la douille extérieure, pour changer l'insert, constitué ici par la queue du corps central, il suffit d'amener la gorge de direction axiale face au doigt. Cette gorge débouchant dans la gorge annulaire et étant sensiblement de même section, l'insert est alors libre en translation. Le doigt se déplace dans la gorge de direction axiale et l'insert sort en direction de l'intérieur du moule.

Parmi de nombreuses liaisons permettant d'assurer un blocage en rotation, l'invention propose une liaison entre la tête et la queue du corps central réalisée par deux méplats parallèles sur la tête du corps central et par une rainure d'une largeur sensiblement égale à la distance séparant les deux méplats ménagée à une extrémité de la queue du corps central, ou vice-versa.

Pour faciliter la sortie de l'insert de la douille, la tête du corps central présente un alésage axial borgne, débouchant du côté de la queue du corps central, et dans lequel est placé un ressort agissant sur la queue du corps central dans le sens de sortie de cette pièce de la douille vers l'intérieur du moule.

Plusieurs dispositifs permettant l'indexation sont possibles.

Avantageusement, les moyens élastiques prévus pour immobiliser le corps central dans la position angulaire choisie par rapport à la douille extérieure comportent d'une part une bague élastique fendue entourant la tête du corps central avec laquelle elle est liée en rotation et présentant au moins un bossage radial, et d'autre part des cavités réparties à la périphérie de l'alésage de la tête de la douille aptes à recevoir chaque bossage radial de la bague élastique.

De toute façon, l'invention sera bien comprise à l'aide de la description qui suit, faisant référence au dessin schématique annexé, représentant à titre d'exemple non limitatif, une forme d'exécution d'un dispositif marqueur avec insert mobile selon l'invention :
Figure 1 est une vue en perspective éclatée du corps central d'un tel dispositif ;
Figure 2 est une vue en coupe longitudinale d'un dispositif complet monté dans un moule d'injection.

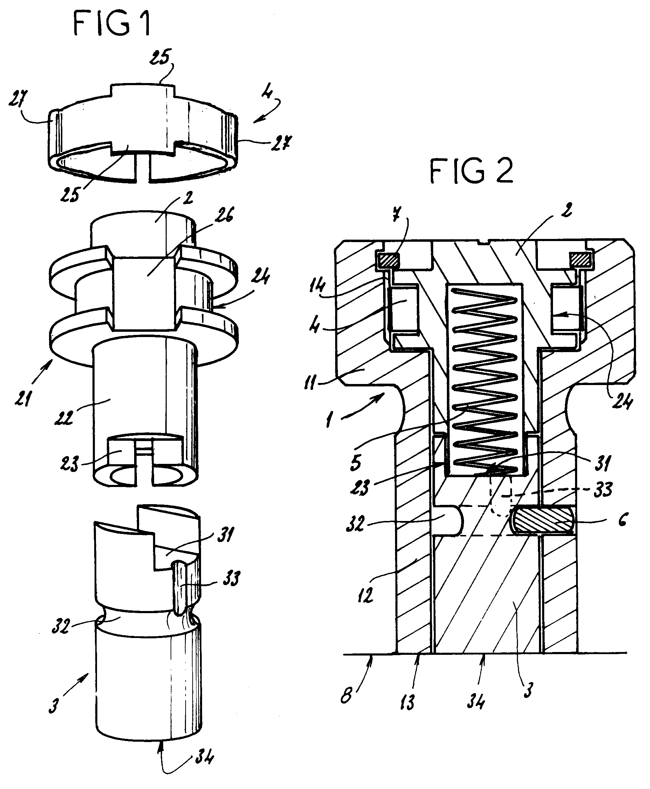

Le dispositif marqueur avec insert mobile pour moule d'injection représenté en coupe en position montée sur la figure 2 comporte :
- une douille extérieure 1,
- un corps central en deux parties, une partie appelée tête 2 et l'autre partie appelée queue 3,
- une bague élastique 4, ainsi que
- un ressort 5, une goupille 6 et un circlips 7.

La douille extérieure 1 est une douille de forme cylindrique circulaire présentant à l'une de ses extrémités une tête élargie 11 de plus grands diamètres intérieur et extérieur que sa partie restante 12, appelée tige. Cette douile 1 est fixée dans la paroi d'un moule 8, à l'aide par exemple de goupilles non représentées. L'extrémité de petit diamètre de la douille 1 affleure la face interne de la paroi du moule 8. La surface annulaire 13 de la tige 12 située à l'extrémité de la douille 1 et affleurant la paroi du moule 8 comporte des indications, régulièrement répartie sur toute la surface 13. Il peut s'agir par exemple des douze quantièmes des mois d'une année. Ces indications peuvent être portées en relief ou en creux.

La tête 2 du corps central a sensiblement la forme d'un arbre présentant une partie élargie 21, d'un diamètre extérieur correspondant au diamètre intérieur de la tête 11 de la douille. La partie restante 22 a un diamètre extérieur correspondant en diamètre intérieur de la tige 12 de la douille. Ainsi, la tête 2 du corps central peut pivoter dans la douille 1. Le circlips 7 empêche la tête 2 du corps central de sortir de la douille 1. Il est monté dans une rainure annulaire usinée dans la tête 11 de la douille.

Au niveau de la partie élargie 21 de la tête du corps central, une rainure annulaire est prévue pour loger la bague élastique 4. Cette bague 4 est fendue et comporte deux languettes 25 s'étendant axialement, destinées à loger dans une rainure axiale 26 ménagée dans la partie élargie 21 de la tête du corps central, afin d'assurer le blocage en rotation et en translation de cette bague 4 par rapport à la tête 2 du corps central. Deux bossages 27 radiaux sont prévus sur cette bague et des cavités 14 sont aménagées dans l'alésage de la tête 11 de la douille pour recevoir les bossages 27. Ainsi, cette bague élastique 4, avec les cavités 14, assurent la fonction d'indexation. La surface d'indexation est grande, puisqu'elle est aménagée dans la partie élargie de la douille.

La tête du corps central 2 comporte également un alésage borgne, débouchant du côté de la queue 3 du corps central. Le ressort hélicoïdal de pression 5 loge dans cet alésage.

L'extrémité de la partie restante 22 comporte deux méplats 23 parallèles, qui servent à assurer le blocage en rotation avec la queue 3 du corps central.

Le queue 3 du corps central est un arbre cylindrique de même diamètre extérieur que la partie restante 22 de la tête 2 du corps central.

La queue 3 comporte une rainure diamétrale 31 ménagée à son extrémité. La largeur de cette rainure 31 correspond à la distance séparant les deux méplats 23 de la tête 2 du corps central. Ainsi la tête 2 et la queue 3 du corps central peuvent s'emboîter l'une dans l'autre et sont bloquées en rotation l'une par rapport à l'autre. La longueur totale de la queue 3 emboîtée sur la tête 2 du corps central est sensiblement égale à la longueur totale de la douille extérieure 1.

Une gorge annulaire 32 est placée sur une circonférence de la queue 3.

La goupille 6 est montée avec serrage dans un alésage radial traversant la paroi de la tige 12 de la douille. Une de ses extrémités débouche dans l'alésage axial de la douille, et loge dans la gorge annulaire 32. La goupille 6 et la gorge 32 sont placées de telle sorte que lorsque l'extrémité de la goupille se trouve dans la gorge 32, la surface frontale 34 de la queue affleure la paroi du moule 8. Un index (non représenté) est gravé sur cette surface 34, et désigne les indications portées sur la surface annulaire 13 de la douille. Cette surface frontale peut également comporter une indication. Ainsi, si les quantièmes des mois de l'année sont gravés sur la surface annulaire 13, le quantième de l'année peut être gravé sur la surface frontale 34 de la queue 3 du corps central.

Une gorge 33 de direction axiale s'étend de la gorge annulaire 32 dans laquelle elle débouche jusqu'à l'extrémité de la queue 3 dans laquelle est ménagée la rainure diamétrale 31. Cette gorge 33 a sensiblement la même section que la gorge 32, et donc l'extrémité de la goupille 6 peut loger dans cette gorge 33.

Le montage de ce dispositif s'effectue alors de la façon suivante. La goupille 6 est mise en place dans son alésage. La queue 3 du corps central est alors montée dans la douille extérieure 1, en alignant la gorge 33 de direction axiale avec l'extrémité de la goupille 6 et en faisant ainsi coulisser la queue 3 dans l'alésage de la douille 1, jusqu'à ce que l'extrémité de la goupille se trouve dans la gorge annulaire 32. La tête 2 du corps central, dans laquelle se trouve le ressort 5 et sur laquelle est montée la bague élastique 4, est alors introduite dans la douille 1 et maintenue en place grâce au montage du circlips 7.

Le fonctionnement du dispositif marqueur ainsi obtenu est le suivant. Depuis l'intérieur du moule, avec la lame d'un tournevis, introduite dans la partie gravée de la queue 3 du corps central, cette dernière peut être entraînée en rotation. Elle entraîne avec elle la tête 2 du corps central et le dispositif d'indexation. Les cavités 14 aménagées dans l'alésage de la tête 11 de la douille et les bossages 27 de la bague élastique 4 coopérant avec ces cavités 14 sont disposés de telle sorte que les bossages 27 soient dans une des cavités 14 lorsque l'index gravé sur la queue 3 du corps central est face à une indication gravée sur la surface annulaire 13 de la douille.

Pour changer la queue 3 du corps central, il suffit de la faire tourner jusqu'à ce que la goupille 6 soit face à la gorge de direction axiale 33. Le ressort 5 pousse alors la queue 3 vers l'intérieur du moule et la pièce 3 peut être sortie et remplacée par une autre. Il est donc inutile de démonter le moule pour changer l'insert mobile 3 de ce dispositif marqueur et ce changement peut s'effectuer depuis l'intérieur du moule.

Comme il va de soi, l'invention ne se limite pas à la forme d'exécution de ce dispositif marqueur avec insert mobile décrite ci-dessus à titre d'exemple. Elle en embrasse au contraire toutes les variantes fonctionnant selon le même principe.

Ainsi par exemple, le dispositif d'indexage peut être remplacé par une bille précontrainte par un ressort montée dans la tête du corps central et des cavités comme celles décrites ci-dessus, ou bien en plaçant la bille et le ressort dans la douille et en ménageant des cavités dans la tête du corps central.

La liaison entre la tête et la queue du corps central peut être remplacée par de nombreuses autres liaisons. La tête peut ainsi présenter une partie mâle polygonale et la queue une partie femelle de forme complémentaire ou vice-versa.

## Revendications

1. Dispositif marqueur avec insert mobile indexable pour moule d'injection du type comprenant :
- d'une part une pièce extérieure (1) en forme de douille cylindrique présentant, à l'une de ses extrémités une tête élargie (11) de plus grands diamètres extérieur et intérieur que sa partie restante (12) ou tige tubulaire (12), et destinée à être fixée définitivement dans la paroi du moule (8) de telle sorte que son extrémité de petit diamètre affleure la face interne de la paroi du moule (8), la couronne formée à cette extrémité de la douille portant, en relief ou en creux, des indications réparties sur sa surface annulaire (13), et
- d'autre part un corps central cylindrique (2,3), ayant sensiblement la même longueur que la douille (1), présentant également à l'une de ses extrémités une tête élargie (21) de sensiblement même diamètre et longueur que l'alésage de la tête élargie (11) de la douille (1), et une partie restante, ou queue (3), de sensiblement même diamètre que l'alésage de la partie non élargie ou tige de la douille, corps central dont l'extrémité de plus petit diamètre porte, de préférence en creux, un index de désignation d'une indication portée sur la couronne de la douille, qui est monté pivotant dans la douille (1) servant de palier et qui peut être pivoté dans autant de positions stables qu'il y a d'indications sur la couronne de la douille,
des moyens étant prévus pour permettre l'entraînement en rotation du corps central par rapport à la douille et d'autres moyens (4), élastiques, étant prévus pour permettre son immobilisation stable dans la position angulaire choisie, caractérisé en ce que la queue (3) et la tête (2) du corps central sont constituées par deux pièces coaxiales indépendantes présentant l'une par rapport à l'autre une complémentarité de forme assurant leur blocage en rotation, en ce que la queue (3) du corps central comporte :
- d'une part une gorge annulaire circonférentielle (32) dans laquelle peut venir se loger l'extrémité d'un doigt (6) de retenue solidaire de la tige tubulaire (12) de la douille, et faisant saillie à l'intérieur de l'alésage de cette tige, de telle sorte que lorsque l'extrémité du doigt est logée dans la gorge annulaire (32), la surface (34) de la queue du corps central portant l'index de désignation affleure la face interne de la paroi du moule (8), et
- d'autre part une gorge de direction axiale (33), débouchant dans la gorge annulaire (32) et s'étendant du côté de la tête (2) du corps central, destinée à permettre le passage du doigt,
et en ce que les moyens élastiques (4) prévus pour immobiliser le corps central dans la position angulaire choisie sont disposés entre la tête (2) du corps central et l'alésage de la tête (11) de la douille.

2. Dispositif marqueur selon la revendication 1, caractérisé en ce que la liaison entre la tête et la queue du corps central est réalisée par deux méplats (23) parallèles sur la tête (2) du corps central et par une rainure (31) d'une largeur sensiblement égale à la distance séparant les deux méplats ménagée à une extrémité de la queue du corps central, ou vice-versa.

3. Dispositif marqueur selon l'une des revendications 1 ou 2, caractérisé en ce que la tête (2) du corps central présente un alésage axial borgne, débouchant du côté de la queue (3) du corps central, et dans lequel est placé un ressort (5) agissant sur la queue (3) du corps central dans le sens de sortie de cette pièce de la douille vers l'intérieur du moule.

4. Dispositif marqueur selon l'une des revendications 1 à 3, caractérisé en ce que les moyens élastiques (4) prévus pour immobiliser le corps central dans la position angulaire choisie par rapport à la douille extérieure comportent d'une part une bague élastique (4) fendue entourant la tête (2) du corps central avec laquelle elle est liée en rotation et présentant au moins un bossage (27) radial, et d'autre part des cavités (14) réparties à la périphérie de l'alésage de la tête de la douille aptes à recevoir chaque bossage (27) radial de la bague élastique (4).

## Claims

1. Marking device with an indexable movable insert for an injection mould of the type comprising:
- on the one hand an external piece (1) in the form of a cylindrical sleeve having, at one of its ends, a broadened head (11) of larger external and internal diameters than its remaining part (12) or tubular barrel (12), and designed to be fixed definitively in the wall of the mould (8) so that its small-diameter end is flush with the internal face of the wall of the mould (8), the annulus formed at this end of the sleeve carrying, in relief or recessed, information distributed over its annular surface (13), and
- on the other hand a cylindrical central body (2, 3), having substantially the same length as the sleeve (1), also having at one of its ends a broadened head (21) of substantially the same diameter and length as the bore of the broadened head (11) of the sleeve (1), and a remaining part, or tail (3), of substantially the same diameter as the bore of the non-broadened part or barrel of the sleeve, a central body whose smaller-diameter end carries, preferably recessed, an index designating an item of information carried on the annulus of the sleeve, which is pivotally mounted in the sleeve (1) serving as a bearing and which can be pivoted in as many stable positions as there are items of information on the annulus of the sleeve,
- means being provided for enabling the central body to be driven in rotation with respect to the sleeve and other, elastic, means (4) being provided to enable it to be immobilised in a stable fashion in the chosen angular position, characterised in that the tail (3) and head (2) of the central body are formed by two independent coaxial pieces having with respect to each other complementarity of shape ensuring their locking with respect to rotation, in that the tail (3) of the central body has:
- on the one hand a circumferential annular groove (32) in which the end of a retaining pin (6) fixed to the tubular barrel (12) of the sleeve can come to be housed, and projecting inside the bore of this barrel, so that, when the end of the pin is housed in the annular groove (32), the surface (34) of the tail of the central body carrying the designation index is flush with the internal face of the wall of the mould (8), and
- on the other hand an axially directed groove (33), opening out in the annular groove (32) and extending on the same side as the head (2) of the central body, designed to allow passage of the pin,
and in that the elastic means (4) provided for immobilising the central body in the chosen angular position are disposed between the head (2) of the central body and the bore in the head (11) of the sleeve.

2. Marking device according to Claim 1, characterised in that the connection between the head and the tail of the central body is achieved by means of two parallel flats (23) on the head (2) of the central body and by means of a recess (31) with a width substantially equal to the distance separating the two flats formed at one end of the tail of the central body, or vice versa.

3. Marking device according to one of Claims 1 or 2, characterised in that the head (2) of the central body has a blind axial bore, opening out on the same side as the tail (3) of the central body, and in which is placed a spring (5) acting on the tail (3) of the central body in the direction in which this piece leaves the sleeve towards the inside of the mould.

4. Marking device according to one of Claims 1 to 3, characterised in that the elastic means (4) provided for immobilising the central body in the chosen angular position with respect to the outer sleeve include on the one hand an elastic split ring (4) surrounding the head (2) of the central body with which it is connected in rotation and having at least one radial protrusion (27), and on the other hand cavities (14) distributed at the periphery of the bore in the head of the sleeve suitable for receiving each radial protrusion (27) on the elastic ring (4).

## Patentansprüche

1. Markiervorrichtung mit einem bewegbaren indexierbaren Einsatz für eine Spritzgießform, welche aufweist:
- einerseits ein äußeres Teil (1) in Form einer zylindrischen Hülse, das an einem seiner Enden einen aufgeweiteten Kopf (11) mit größerem Außendurchmesser und Innendurchmesser als sein aufliegender Abschnitt (12) oder rohrförmiger Stab (12) hat, und das dazu dient, in der Wand der Gießform (8) definitiv derart befestigt zu werden, daß sein Ende mit kleinem Durchmesser mit der Innenfläche der Wand der Gießform (8) bündig ist, wobei die an diesem Ende der Hülse gebildete Krone auf ihrer kreisringförmigen Oberfläche (13) verteilte erhabene oder vertiefte Kennzeichnungen trägt, und
- andererseits einen zylindrischen mittigen Körper (2, 3), der im wesentlichen dieselbe Länge wie die Hülse (1) hat und ebenfalls an einem seiner Enden einen aufgeweiteten Kopf (21) mit im wesentlichen demselben Durchmesser und derselben Länge wie die Bohrung des aufgeweiteten Kopfes (11) der Hülse (1) sowie einen aufliegenden Abschnitt oder Schwanz (3) mit im wesentlichen demselben Durchmesser wie die Bohrung des nicht aufgeweiteten Teils oder der Stange der Hülse aufweist, wobei bei dem mittigen Körper das Ende mit kleinerem Durchmesser, vorzugsweise vertieft, einen Index zum Bezeichnen einer auf die Krone der Hülse gebrachten Kennzeichnung trägt, der in der als Lager dienenden Hülse (1) drehbar gelagert ist und der in genauso viele stabile Stellungen gedreht werden kann, wie es Kennzeichnungen auf der Krone der Hülse hat,
wobei Mittel vorgesehen sind, um die Drehung des mittigen Körpers in Bezug auf die Hülse zu ermöglichen, sowie andere elastische Mittel (4) vorgesehen sind, um seine stabile Festlegung in der ausgewählten Winkelposition zu ermöglichen, dadurch gekennzeichnet, daß der Schwanz (3) und der Kopf (2) des mittigen Körpers aus zwei unabhängigen koaxialen Teilen bestehen, die in Bezug zueinander eine komplementäre Form haben, die ihre gegenseitige Drehblockierung gewährleistet, und daß der Schwanz (3) des mittigen Körpers aufweist:
- einerseits eine in Umfangsrichtung verlaufende Ringnut (32), in die das Ende eines mit dem rohrförmigen Stab (12) der Hülse einstückigen Haltezapfens (6) eindringen kann und das ins Innere der Bohrung dieser Stange ragt, so daß, wenn das Ende des Zapfens in die Ringnut (32) eingetreten ist, die Oberfläche (34) des Schwanzes des mittigen Körpers, der den Kennzeichnungsindex trägt, mit der inneren Fläche der Wand der Gießform (8) bündig ist, und
- andererseits eine Nut in axialer Richtung (33), die in die Ringnut (32) mündet und sich von der Seite des Kopfes (2) des mittigen Körpers erstreckt, und dazu dient, den Durchtritt des Zapfens zu ermöglichen,
und daß die elastischen Mittel (4), die zum Festlegen des mittigen Körpers in der ausgewählten Winkelposition vorgesehen sind, zwischen dem Kopf (2) des mittigen Körpers und der Bohrung des Kopfes (11) der Hülse angeordnet sind.

2. Markiervorrichtung nach Anspruch 1, dadurch gekennzeichnet, daß die Verbindung zwischen dem Kopf und dem Schwanz des mittigen Körpers gebildet ist aus zwei parallelen Abflachungen (23) auf dem Kopf (2) des mittigen Körpers und durch eine Rille (31) mit einer Breite, die im wesentlichen gleich der Entfernung ist, welche die beiden Abflachungen trennt, und an einem Ende des Schwanzes des mittigen Körpers eingearbeitet ist, oder umgekehrt.

3. Markiervorrichtung nach einem der Ansprüche 1 oder 2, dadurch gekennzeichnet, daß der Kopf (2) des mittigen Körpers eine axiale Blindbohrung aufweist, die auf der Seite des Schwanzes (3) des mittigen Körpers mündet und in welche eine Feder (5) eingebracht ist, die auf den Schwanz (3) des mittigen Körpers in der Austrittsrichtung dieses Teils der Hülse zum Innern der Gießform einwirkt.

4. Markiervorrichtung nach einem der Ansprüche 1 bis 3, dadurch gekennzeichnet, daß die elastischen Mittel (4), die zum Festlegen des mittigen Körpers in der ausgewählten Winkelposition in Bezug auf die äußere Hülse vorgesehen sind, einerseits einen den Kopf (2) des mittigen Körpers umgebenden gespaltenen elastischen Ring (4) aufweisen, mit dem sie drehfest verbunden ist und der mindestens einen radialen Wulst (27) hat, und andererseits Hohlräume (14) aufweisen, die am Rand der Bohrung des Kopfes der Hülse verteilt sind und jeden radialen Wulst (27) des elastischen Rings (4) aufnehmen können.
